# DEMANDE DE BREVET EUROPEEN

(11) **EP 0 947 811 A1**
(43) Date de publication de la demande: **06.10.1999**
(21) Numéro de dépôt: 99400801.9
(22) Date de dépôt: 01.04.1999
(51) Int. Cl.: G01F 23/26

(54) **Sonde de mesure capacitive du niveau d'un liquide et réservoir équipé d'une telle sonde**

(30) Priorité: 02.04.1998 FR 9804117
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Delatte, Daniel, 75321 Paris Cedex 07 (FR)
(74) Mandataire: Le Moenner, Gabriel

(57) **Abrégé**

Sonde (6) de mesure capacitive du niveau d'un liquide dans un réservoir (1), du type comprenant un corps (7) de montage de la sonde et une première armature (8) portée par le corps et destinée à former avec une deuxième armature (41) un condensateur de mesure destiné à être relié à une source de tension électrique, lesquelles armatures sont destinées à être partiellement immergées dans le liquide en délimitant entre elles un espace de réception du liquide. La première armature (8) est montée de manière réglable sur le corps entre au moins une position haute de mesure et une position basse de mesure.

Application au stockage d'azote en équilibre liquide/vapeur pour la conservation de produits biologiques.

## Description

La présente invention concerne une sonde de mesure capacitive du niveau d'un liquide dans un réservoir, du type comprenant un corps de montage de la sonde et une première armature portée par le corps et destinée à former avec une deuxième armature un condensateur de mesure destiné à être relié à une source de tension électrique, lesquelles armatures sont destinées à être partiellement immergées dans le liquide en délimitant entre elles un espace de réception du liquide.

L'invention s'applique en particulier au stockage d'azote en équilibre liquide/vapeur, par exemple pour la conservation de produits biologiques.

Pour une utilisation donnée, par exemple pour des applications médicales, l'azote en équilibre liquide/vapeur est stocké dans un réservoir avec un niveau nominal prédéterminé d'azote liquide dépendant de l'utilisation.

Un tel réservoir est généralement équipé d'une sonde du type précité disposée verticalement pour mesurer le niveau de liquide et éventuellement réguler ce niveau à la valeur nominale prédéterminée. Une sonde de ce type est classiquement intégrée dans un dispositif de mesure capacitive comportant une unité électronique de traitement qui incorpore la source de tension. Cette unité électronique est adaptée pour déterminer la hauteur du liquide dans le réservoir à partir de la valeur de la capacité du condensateur de mesure de la sonde. En effet, en raison des constantes diélectriques différentes du liquide et du gaz contenus dans le réservoir, la capacité du condensateur varie proportionnellement à la hauteur de liquide entre ses armatures et dépend donc du niveau de liquide dans le réservoir.

Généralement, pour un réservoir donné, la sonde doit pouvoir mesurer toute une gamme de niveaux nominaux de liquide. Cette gamme comprend un niveau nominal bas de liquide, par exemple dans le cas où l'utilisateur souhaite stocker des produits biologiques dans de l'azote gazeux dans le réservoir, et un niveau nominal haut de liquide, par exemple dans les cas où l'utilisateur souhaite stocker des produits biologiques dans de l'azote liquide dans le réservoir.

En conséquence, la hauteur des armatures d'une telle sonde est du même ordre de grandeur que la hauteur maximale de stockage du réservoir considéré. Ainsi, des sondes différentes sont nécessaires pour des réservoirs de hauteurs maximales de stockage différentes.

L'invention a pour but de résoudre ce problème en fournissant une sonde standard pouvant être utilisée pour des réservoirs de hauteurs maximales de stockage différentes.

A cet effet, l'invention a pour effet une sonde de mesure capacitive du niveau d'un liquide dans un réservoir, du type précité, caractérisée en ce que la première armature est montée de manière réglable sur le corps entre au moins une position haute de mesure et une position basse de mesure.

Selon des modes particuliers de réalisation, la sonde peut comprendre l'une ou plusieurs des caractéristiques suivantes, prises isolément ou selon toutes les combinaisons techniquement possibles :
. la première armature est coulissante par rapport au corps de montage entre lesdites positions ;
. la deuxième armature appartient à la sonde et est montée de manière réglable sur le corps de la sonde entre au moins une position haute de mesure et une position basse de mesure ;
. ladite deuxième armature est solidaire de la première armature ;
. la ou chaque armature est tubulaire et coulisse télescopiquement par rapport au corps de la sonde ;
. la sonde comprend des moyens de rappel de la ou de chaque armature vers l'une desdites positions ; et
. les moyens de rappel sont des moyens de connexion électrique de la ou de chaque armature à la source de tension.

L'invention a également pour objet un réservoir de stockage, notamment d'un fluide cryogénique en équilibre liquide/vapeur, caractérisé en ce qu'il est équipé d'une sonde telle que décrite ci-dessus dont la ou chaque armature est placée dans une cavité communiquant avec le réservoir.

Selon des modes particuliers de réalisation, le réservoir peut comprendre l'une ou plusieurs des caractéristiques suivantes, prises isolément ou selon toutes les combinaisons techniquement possibles :
. la cavité comprend une armature fixe disposée en regard d'une armature de la sonde et délimitant avec celle-ci un espace de réception du fluide en formant un condensateur de mesure ; et
. le réservoir comprend une unité électronique de traitement qui comporte une source de tension et qui est reliée au ou à chaque condensateur de mesure, cette unité étant adaptée pour déterminer le niveau du liquide et/ou commander des moyens d'alimentation du réservoir en liquide cryogénique et/ou déclencher une alarme.

L'invention sera mieux comprise à la lecture de la description qui va suivre, donnée uniquement à titre d'exemple, et faite en se référant aux dessins annexés sur lesquels :
- les figures 1 et 2 sont des sections latérales et schématiques d'un réservoir selon l'invention, illustrant respectivement deux positions de mesure différentes de la sonde de mesure capacitive,
- la figure 3 est une vue schématique en coupe longitudinale partielle de la sonde de la figure 1,
- la figure 4 est une vue partielle en coupe longitudinale prise suivant la ligne IV-IV de la figure 3, et
- la figure 5 est une vue schématique en coupe longitudinale d'une sonde selon un deuxième mode de réalisation de l'invention.

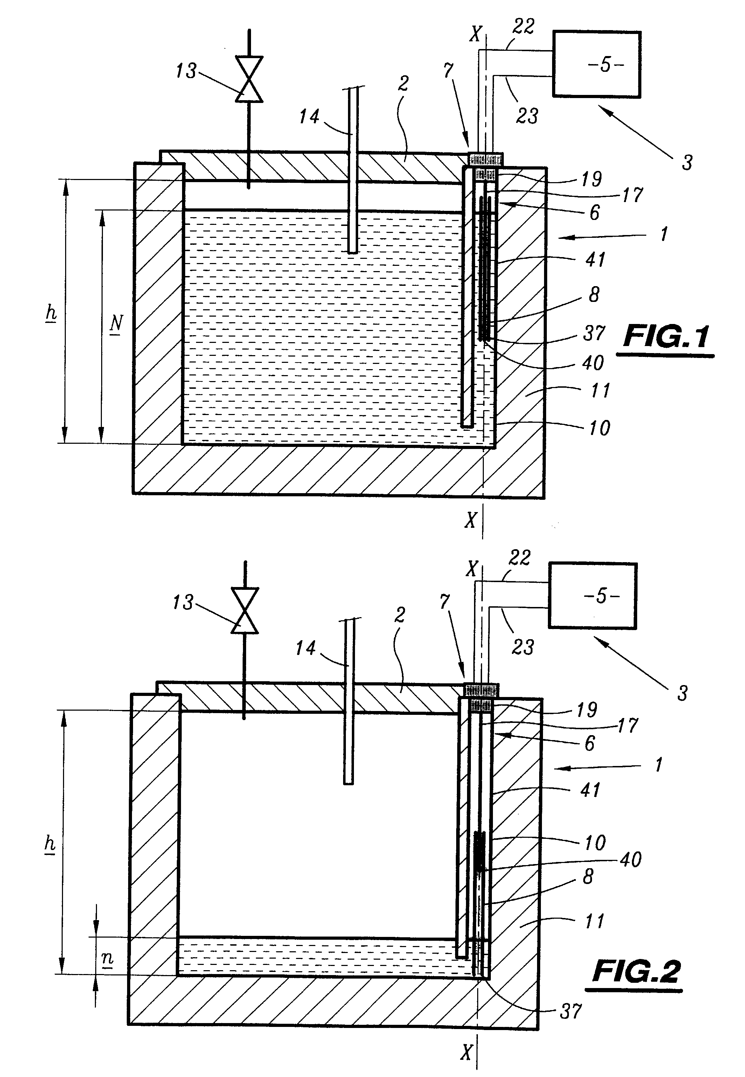

La figure 1 représente un réservoir 1 calorifugé de stockage d'azote en équilibre liquide/vapeur, fermé par un couvercle 2 et équipé d'un dispositif 3 de mesure capacitive du niveau de liquide dans le réservoir 1.

Ce dispositif 3 comprend une unité électronique de traitement 5 classique, incorporant une source de tension, et une sonde de mesure capacitive 6 connectée électriquement à cette unité 5.

La sonde 6, de forme générale de révolution d'axe X-X, comprend un corps de montage 7 et une première armature 8 portée par le corps 7. La sonde 6 est logée dans une cavité 10, tubulaire à base circulaire et d'axe vertical confondu avec l'axe X-X, qui est ménagée dans une paroi latérale 11 du réservoir 1. Cette cavité 10 d'une part communique avec le fond du réservoir 1 et d'autre part débouche à l'air libre, en l'absence de la sonde 6.

Le couvercle 2 est muni d'une soupape 13 de limitation de pression et d'un tube vertical 14 de soutirage d'azote depuis le réservoir 1.

Sur la figure 1, le niveau nominal N choisi de liquide dans le réservoir 1 est un niveau haut pour permettre le stockage de produits biologiques dans l'azote liquide du réservoir 1. Ainsi, le niveau nominal N est légèrement inférieur à la hauteur maximale h de stockage du réservoir 1, comme cela sera décrit plus loin.

On a représenté en 14 un tuyau d'alimentation du réservoir en azote liquide.

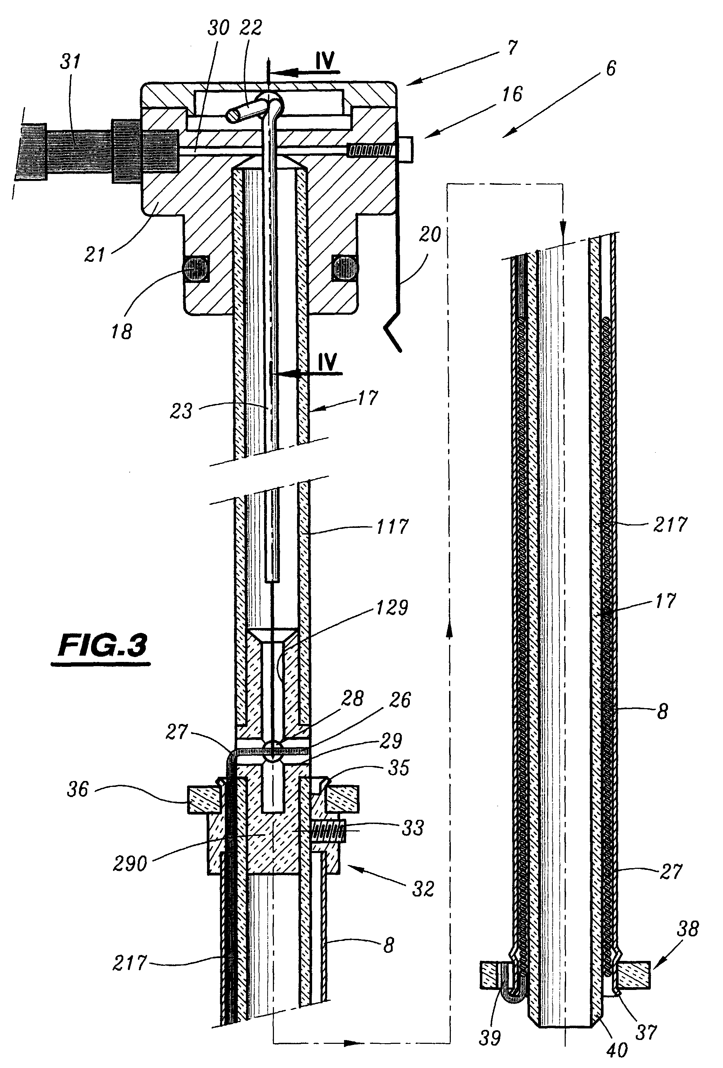

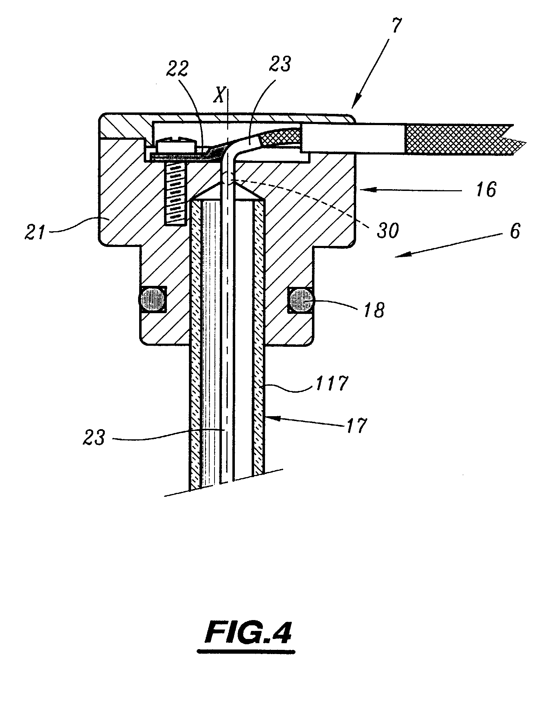

Comme illustré plus en détail par les figures 3 et 4, le corps 7 comprend une tête supérieure 16 et une tige électriquement isolante de guidage 17 en deux tronçons supérieur 117 et inférieur 217, prolongeant vers le bas cette tête 16. La tête 16 est munie de moyens 18 d'étanchéité, sous forme d'un joint annulaire, pour former un bouchon obturant de manière étanche l'ouverture supérieure 19 (figure 1) de la cavité 10.

Cette tête 16 comprend également une lame élastique métallique 20 vissée sur un corps métallique 21 de la tête 16. Une fois la sonde montée sur le réservoir 1 (figure 1), une région (non représentée) de la paroi 11 est pincée entre cette lame 20 et le corps 21.

La tête 16 reçoit deux conducteurs 22 et 23 connectant l'unité 5 à la sonde 6. Un premier conducteur 22 est connecté électriquement (figure 4), au moyen d'un oeillet et d'une vis, au corps 21 de la tête 16 et donc à la lame 20.

Le deuxième conducteur 23 (figure 3) passe à l'intérieur de la tige 17 creuse. A son extrémité creuse, il est connecté électriquement à une première extrémité 26 d'un ressort métallique hélicoïdal long et fin 27 par l'intermédiaire d'une vis 28 transversale à la tige 17. La vis 28 fixe l'extrémité 26 du ressort 27 dans la tige 17.

Un canal transversal 29 traverse la tige 17 au niveau de la vis 28, perpendiculairement à celle-ci, et communique avec l'intérieur de la tige 17 via un canal vertical ascendant 129. A cet effet, une pièce 290, emboîtée dans les extrémités en regard des tronçons 117 et 217 de la tige 17 est pourvue des canaux 29 et 129. Cette pièce 290 obture le passage longitudinal intérieur de la tige 17 à un niveau légèrement inférieur à celui du canal 29.

La tête 16 comprend en outre un conduit 30 transversal ménagé dans le corps métallique 21 et communiquant d'une part avec l'intérieur de la tige creuse 17, et donc avec le canal 29, et d'autre part avec un conduit 31 d'évacuation d'azote gazeux qui n'est pas représenté en coupe sur la figure 3.

L'armature 8 est un tube métallique à base circulaire enfilé sur la tige 17 et coulissant télescopiquement sur cette dernière.

L'armature 8, d'axe X-X, est prolongée au niveau de sa partie supérieure par un manchon 32 solidaire de l'armature 8 et traversé par une vis transversale 33 de réglage de la position de l'armature 8 sur la tige 17.

L'extrémité supérieure 35 du manchon 32 est entourée extérieurement d'un anneau isolant 36 d'écartement d'axe X-X.

L'extrémité inférieure 37 de l'armature 8 est munie d'un embout isolant 38 d'écartement, sous forme d'un anneau d'axe X-X.

Le ressort 27 passe entre la première armature 8 et la tige 17, et son extrémité inférieure 39 est fixée et connectée électriquement à l'extrémité 37 de la première armature 8.

Le ressort 27 s'enroule autour de la tige 17 dans la partie inférieure de l'armature 8.

La position de la première armature 8 sur les figures 1 et 3 est une position haute de mesure, dans laquelle l'extrémité inférieure 37 de la première armature 8 et l'extrémité inférieure 40 de la tige 17 sont sensiblement au même niveau. Cette position haute est adaptée à la mesure d'un niveau de liquide N haut, comme illustré par la figure 1.

Sur cette figure 1, la sonde 6 est montée sur le réservoir 1 par l'intermédiaire de la tête 16, et seule une région supérieure de la première armature 8 est émergée. Les anneaux 36 et 38 maintiennent la première armature 8 à distance de la paroi métallique 41 délimitant la cavité 10. Cette paroi métallique 41, en regard de la première armature 8, forme avec cette dernière un condensateur de mesure. La deuxième armature de ce condensateur, constituée par la paroi métallique 41, est fixe et connectée électriquement à l'unité électronique de traitement 5 par l'intermédiaire de la lame 20 et du conducteur 22. La première armature 8 de ce condensateur est connectée électriquement à l'unité 5 par l'intermédiaire du ressort 27 et du conducteur 23. Les armatures 8 et 41 délimitent entre elles un espace de réception du liquide et sont partiellement immergées dans celui-ci.

Ainsi, la sonde 6, intégrée au dispositif 3 de mesure capacitive, permet dans sa position haute de mesurer un niveau N haut de liquide dans le réservoir 1 en déterminant classiquement la capacité du condensateur de mesure de la sonde 6.

Les moyens 18 d'étanchéité de la tête 16 permettent d'éviter la pénétration d'humidité dans la cavité 10, ce qui perturberait le fonctionnement de la sonde 6.

La figure 2 illustre l'utilisation de la sonde 6 pour mesurer un niveau de liquide n bas dans le réservoir 1.

Dans ce cas, la première armature 8 est dans une position basse par rapport au corps 2. Dans cette position basse de mesure, l'extrémité 40 de la tige 17 est éloignée vers le bas de l'extrémité 37 de la première armature 8. La hauteur totale de la sonde 6 est donc plus importante dans cette position que dans la position haute illustrée par les figures 1 et 3, de sorte que seule une partie inférieure de la première armature 8 et de la paroi 41 du réservoir est immergée dans le liquide (figure 2) en permettant ainsi la mesure du niveau de liquide n bas.

Pour modifier la position de la première armature 8 par rapport à la tige 17, la sonde étant sortie de la cavité 10, on desserre la vis 33 puis on fait coulisser l'armature 8 jusqu'à la position désirée et on resserre la vis 33.

Le ressort 17 constitue des moyens de rappel de la première armature vers sa position haute (figures 1 et 3). En effet, ce ressort 17 se tend progressivement à mesure que l'on déplace la première armature 8 vers sa position basse.

La sonde 6 est de hauteur réglable entre sa position rétractée (figures 1 et 3) et sa position déployée (figure 2).

La sonde 6 est capable d'assurer la mesure de pratiquement tous les niveaux de liquide dans le réservoir 1 en jouant sur l'extension de la sonde 6.

On conçoit que cette sonde télescopique réglable 6 peut être utilisée pour des réservoirs 1 de hauteurs maximales de stockage h différentes et peut donc constituer une sonde standard pour toute une gamme de réservoirs.

Par ailleurs, l'unité de traitement électronique 5 classique est généralement adaptée pour déclencher une alarme et/ou des moyens de remplissage d'azote liquide (non représentés) via le tuyau 14 lorsque le niveau mesuré de liquide est en dehors d'une plage prédéterminée, par exemple de [- 5%, + 5%]. Cette plage est centrée sur le niveau nominal n ou N choisi, et son étendue est définie par rapport à la plage totale de mesure de la sonde 6.

L'étendue de cette plage [- 5%, + 5%] correspond ainsi à 10% de la hauteur de l'armature 8 de la sonde 6. Ainsi, 5% au moins de la hauteur de l'armature 8 doit donc être émergée dans le cas de la figure 1 et au moins 5% de la hauteur de l'armature 8 doit être immergée dans le cas de la figure 2. Ces hauteurs minimales émergée ou immergée sont donc inférieures à celles d'une sonde classique où la première armature est notablement plus haute que celle de la sonde 6. Ainsi, la sonde 6 selon l'invention permet de neutraliser une partie plus faible de la hauteur h du réservoir 1 et donc de réduire la hauteur totale d'un tel réservoir pour un niveau N maximal donné.

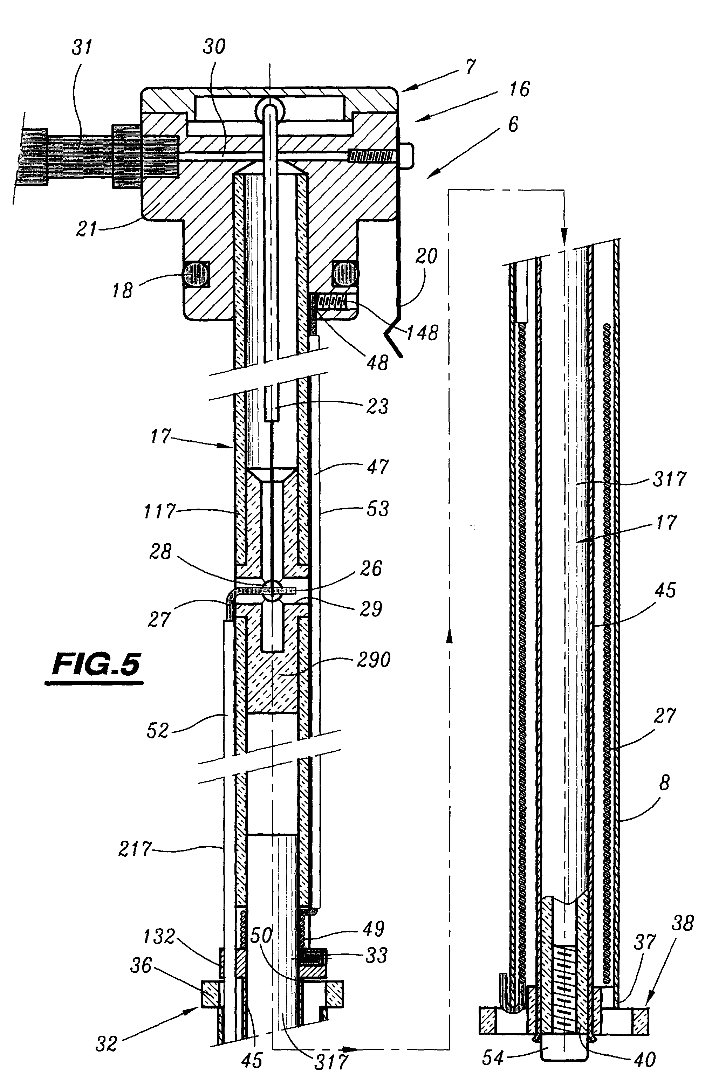

Selon un deuxième mode de réalisation illustré par la figure 5, la sonde 6 comprend une autre armature 45 tubulaire à base circulaire, coaxiale à l'armature 8 et disposée à l'intérieur de celle-ci. Le tronçon 217 de la tige 17 est de courte longueur, et se prolonge vers le bas par un autre tronçon 317 emboîté dans son extrémité inférieure. L'armature 45 d'axe X-X est enfilée et coulisse télescopiquement sur le tronçon 317. Le ressort 27 passe entre l'armature 45 et l'armature 8. Le manchon 32 et l'embout 38 solidarisent les deux armatures 8 et 45 et maintiennent entre celles-ci un écart de sorte que ces armatures délimitent entre elles un espace de réception de liquide.

L'armature 45 est connectée électriquement au corps métallique 21 de la tête 16 par l'intermédiaire d'un conducteur 47. L'extrémité supérieure 48 du conducteur 47 est connectée et fixée au corps 21 par l'intermédiaire d'une vis transversale 148 et l'autre extrémité 49 est connectée et fixée à une bague métallique 132 brasée sur l'extrémité supérieure 50 de l'armature 45 et traversée par la vis de réglage 33.

Ce conducteur 47, sous la forme d'un ressort hélicoïdal long et fin, est enroulé autour de la tige 17 entre l'extrémité inférieure du tronçon 217 et la bague 33, pour permettre le déplacement conjoint des armatures 8 et 45 par rapport à la tige 17.

Des gaines isolantes 52 et 53 entourent respectivement les ressorts 27 et 47 sur la partie rectiligne verticale de leurs longueurs pour limiter les risques de court- circuit entre les armatures 8 et 45. La partie inférieure 317 de la tige 17, de plus faible section, est obturée au niveau de son extrémité inférieure 40 par un bouchon 54 vissé.

Les armatures 8 et 45 forment un autre condensateur de mesure, dont la deuxième armature est constituée par l'armature 45, et qui est disposé électriquement parallèlement au premier condensateur de mesure décrit en regard des figures 1 à 4. L'armature 8 est une première armature commune aux deux condensateurs de mesure.

Ce deuxième mode de réalisation permet d'améliorer la résolution de la sonde 6 par rapport à celle des figures 1 à 4 grâce à la présence d'un condensateur de mesure supplémentaire.

Les armatures 8 et 45 sont portées par la tige 17 de manière réglable entre une position haute de mesure, correspondant à une position rétractée de la sonde télescopique 6, et une position basse de mesure correspondant à une position déployée de la sonde 6. Les ressorts 27 et 47 jouent le rôle de moyens de rappel des armatures 8 et 45 dans leur position haute.

## Revendications

1. Sonde (6) de mesure capacitive du niveau d'un liquide dans un réservoir (1), du type comprenant un corps (7) de montage de la sonde et une première armature (8) portée par le corps et destinée à former,avec une deuxième armature (41 ; 41, 45) un condensateur de mesure destiné à être relié à une source de tension électrique, lesquelles armatures sont destinées à être partiellement immergées dans le liquide en délimitant entre elles un espace de réception du liquide, caractérisée en ce que la première armature (8) est montée de manière réglable sur le corps entre au moins une position haute de mesure et une position basse de mesure.

2. Sonde selon la revendication 1, caractérisée en ce que la première armature (8) est coulissante par rapport au corps de montage (7) entre lesdites positions.

3. Sonde selon l'une quelconque des revendications 1 ou 2, caractérisée en ce que la deuxième armature (45) appartient à la sonde et est montée de manière réglable sur le corps (7) de la sonde entre au moins une position haute de mesure et une position basse de mesure.

4. Sonde selon la revendication 3, caractérisée en ce que ladite deuxième armature (45) est solidaire de la première armature (8).

5. Sonde selon l'une quelconque des revendications 1 à 4, caractérisée en ce que la ou chaque armature (8; 8, 45) est tubulaire et coulisse télescopiquement par rapport au corps (7) de la sonde.

6. Sonde selon l'une quelconque des revendications 1 à 5, caractérisée en ce qu'elle comprend des moyens (27; 27, 47) de rappel de la ou de chaque armature (8; 8, 45) vers l'une desdites positions.

7. Sonde selon la revendication 6, caractérisée en ce que les moyens (27; 27, 47) de rappel sont des moyens de connexion électrique de la ou de chaque armature (8; 8, 45) à la source de tension.

8. Réservoir de stockage (1), notamment d'un fluide cryogénique en équilibre liquide/vapeur, caractérisé en ce qu'il est équipé d'une sonde (6) selon l'une quelconque des revendications 1 à 7 dont la ou chaque armature (8 ; 8, 45) est placée dans une cavité (10) communiquant avec le réservoir (1).

9. Réservoir selon la revendication 8, caractérisé en ce que la cavité (10) comprend une armature fixe (41) disposée en regard d'une armature (8) de la sonde et délimitant avec celle-ci un espace de réception du fluide en formant un condensateur de mesure.

10. Réservoir selon la revendication 8 ou 9, caractérisé en ce qu'il comprend une unité électronique de traitement (5) qui comporte une source de tension et qui est reliée au ou à chaque condensateur de mesure, cette unité (5) étant adaptée pour déterminer le niveau du liquide et/ou commander des moyens (14) d'alimentation du réservoir en liquide cryogénique et/ou déclencher une alarme.
